# FASCICULE DE BREVET EUROPEEN

(11) **EP 3 077 235 B1**
(45) Date de publication et mention de la délivrance du brevet: **03.01.2018**
(21) Numéro de dépôt: 14825396.6
(22) Date de dépôt: 26.11.2014
(51) Int. Cl.: B60H 1/00, F41H 7/03, F41H 7/04

(54) **DISPOSITIF DE DISTRIBUTION D'AIR DE CLIMATISATION POUR UNE TOURELLE D'UN VÉHICULE ET VÉHICULE COMPORTANT UN TEL DISPOSITIF**
KLIMATISIERUNGS-LUFTABGABEVORRICHTUNG FÜR EINEN FAHRZEUGDREHTURM UND FAHRZEUG MIT SOLCH EINER VORRICHTUNG
AIR-CONDITIONING AIR DISPENSING DEVICE FOR A VEHICLE TURRET, AND VEHICLE COMPRISING SUCH A DEVICE

(30) Priorité: 05.12.2013 FR 1302867
(43) Date de publication de la demande: 12.10.2016
(73) Titulaire: NEXTER Systems, 42328 Roanne (FR)
(72) Inventeur: DUINAT, Jean Luc, F-18023 Bourges (FR); VENAILLE, Patrick, F-18023 Bourges (FR); DESCATOIRE, Xavier, F-18023 Bourges (FR); CLAMAGIRAND, Marc, F-18023 Bourges (FR)
(74) Mandataire: Cabinet Chaillot
(86) Numéro de dépôt international: PCT/FR2014/053040
(87) Numéro de publication internationale: WO 2015/082802

(56) Documents cités:
- EP-A1- 2 145 786
- WO-A1-03/062732
- FR-A- 828 457

## Description

Le domaine technique de l'invention est celui des dispositifs de distribution d'air de climatisation pour véhicules militaires comportant une tourelle.

Les véhicules militaires avec tourelle nécessitent d'être climatisés et ventilés afin d'assurer des conditions de vie satisfaisantes à l'équipage et des températures de fonctionnement adéquates aux équipements de bord. La circulation de l'air dans la caisse est classiquement assurée par une unité de ventilation couplée avec une climatisation et un réseau de ventilation comportant des canalisations acheminant l'air vers les occupants et les équipements. La ventilation de la tourelle est en revanche très délicate du fait du confinement de la tourelle et de son caractère pivotant qui rend difficile la connexion du réseau de ventilation de la caisse avec un réseau de ventilation de la tourelle.

Le brevet EP2145786 divulgue un véhicule dans lequel l'unité de ventilation est solidaire soit de la tourelle soit de la caisse, et le véhicule comporte deux circuits d'acheminement d'air. Un premier pour la distribution d'air dans la caisse et un deuxième pour la distribution de l'air dans la tourelle, les deux circuits pouvant communiquer l'un avec l'autre uniquement dans une position angulaire particulière de la tourelle, position pour laquelle une ouverture du réseau de ventilation de la tourelle se trouve en regard d'une ouverture du réseau de ventilation de la caisse. Dans les autres positions l'air ne circule plus directement entre les deux circuits et le circuit de ventilation de la tourelle prélève de l'air directement dans la caisse par les ouvertures du panier de la tourelle.

Un tel dispositif ne permet pas d'avoir une ventilation ayant les mêmes performances pour toutes les positions angulaires de la tourelle par rapport à la caisse et en particulier si la tourelle enchaine plusieurs tours.

L'invention vise à résoudre ce problème de non permanence des flux de ventilation entre caisse et tourelle.

Ainsi, l'invention porte sur un dispositif de distribution d'air de climatisation pour une tourelle d'un véhicule montée rotative par rapport à une caisse du véhicule, caractérisé en ce qu'il comporte au moins une goulotte annulaire coaxiale à l'axe de rotation de la tourelle et comportant au moins un premier orifice d'écoulement, goulotte comportant une ouverture annulaire qui lui est concentrique, la goulotte recevant un anneau obturateur qui ferme l'ouverture de la goulotte, anneau apte à tourner relativement à la goulotte, et comportant au moins un second orifice d'écoulement d'air, la goulotte étant destinée à être rendue solidaire de la caisse, respectivement de la tourelle, tandis que l'anneau obturateur est destiné à être rendu solidaire de la tourelle, respectivement de la caisse.

Avantageusement, le dispositif comprend des moyens assurant l'étanchéité à l'air de la liaison entre goulotte et anneau obturateur.

Avantageusement, le dispositif comprend deux goulottes annulaires distinctes obturées chacune par un anneau obturateur, chaque goulotte comportant un premier orifice d'écoulement et chaque anneau obturateur comportant un second orifice d'écoulement.

L'invention porte aussi sur un véhicule comportant une tourelle comportant un réseau de ventilation tourelle et une caisse comportant un réseau de ventilation caisse, les réseaux comportant chacun des canalisations destinées à l'acheminement d'air chaud et des canalisations distinctes destinées à l'acheminement d'air frais, la tourelle étant montée pivotante sur un axe par rapport à la caisse, véhicule caractérisé en ce qu'il comporte un dispositif de distribution d'air de climatisation comportant au moins une goulotte annulaire coaxiale à l'axe de rotation de la tourelle et dotée d'au moins un premier orifice d'écoulement, goulotte comportant une ouverture annulaire qui lui est concentrique, la goulotte recevant un anneau obturateur qui ferme l'ouverture de la goulotte, anneau apte à tourner relativement à la goulotte et comportant au moins un second orifice d'écoulement d'air, la goulotte étant rendue solidaire de la caisse, respectivement de la tourelle, tandis que l'anneau obturateur est rendu solidaire de la tourelle, respectivement de la caisse.

Avantageusement, la ou les goulottes sont solidaires de la caisse et connectées au réseau de ventilation caisse au niveau du ou des premiers orifices, le ou les anneaux obturateurs étant solidaires de la tourelle et connectés au réseau de ventilation tourelle par leurs second orifices.

Avantageusement, le véhicule comporte deux goulottes annulaires distinctes obturées chacune par un anneau obturateur, chaque goulotte comportant un premier orifice d'écoulement et chaque anneau obturateur comportant un second orifice d'écoulement, une première goulotte constituant un circuit de conduite d'air frais de la caisse vers la tourelle et une deuxième goulotte constituant un circuit de retour d'air chaud de la tourelle vers la caisse.

Selon un autre mode de réalisation, le ou les second orifices sont prolongés vers la tourelle par une canalisation aéraulique qui est divisée en deux parties coaxiales, la tourelle comportant un plateau mobile qui coupe transversalement les canalisations entre les deux parties des canalisations, plateau mobile entre une position dite ouverte et une position dite fermée, le plateau comportant au moins une forme en coin qui est destinée à coopérer en position fermée avec les deux parties de chaque canalisation de façon à assurer l'étanchéité de la canalisation, chaque forme en coin comportant au moins un perçage destiné à la circulation d'air, perçage situé en regard de la section traversée de la canalisation.

Le plateau pourra être solidaire d'une porte et pivotera coaxialement à la tourelle entre une position fermée et une position ouverte de ladite porte.

L'invention sera mieux comprise à lecture de la description suivante, description faite en référence aux dessins en annexes, dessins dans lesquels :
La figure 1 représente une vue de trois quarts inférieur d'une tourelle d'un véhicule selon l'invention.
La figure 2 représente une vue éclatée d'un dispositif de distribution d'air selon l'invention.
La figure 3 représente une vue de trois quarts supérieur d'un autre mode de réalisation d'un dispositif de distribution d'air selon l'invention.
La figure 4 représente une vue partielle en coupe d'un véhicule comportant un dispositif de distribution d'air selon l'invention.
La figure 5 représente une vue de détail d'un dispositif selon l'invention selon un autre mode de réalisation.
La figure 6 représente une vue de détail d'un dispositif selon l'invention selon un autre mode de réalisation.
La figure 7 représente une vue de détail d'un dispositif selon l'invention selon un autre mode de réalisation.
La figure 8 représente une vue en coupe d'un dispositif selon un autre mode de réalisation de l'invention, coupe réalisée suivant des plans parallèles dont la trace est repérée BB à la figure 10.
La figure 9a représente une vue de détail en coupe selon le plan repéré CC à la figure 10, vue correspondant à une position de la tourelle porte fermée.
La figure 9b est une vue en coupe analogue à la figure 9a mais montrant le dispositif avec le plateau dégagé des canalisations lors du mouvement d'ouverture de la porte.
La figure 10 représente une vue de dessous schématique du dispositif selon ce mode de réalisation de l'invention, vue dont le plan de coupe est repéré AA sur la figure 8, la porte de la tourelle étant fermée.
La figure 11 est une vue analogue à la figure 10, mais dans laquelle la porte de la tourelle est ouverte.

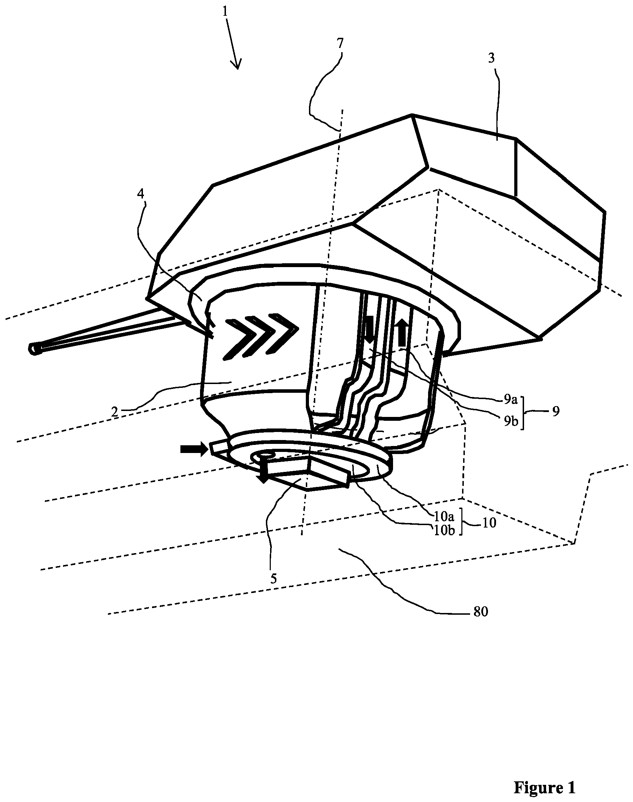

Selon la figure 1, une tourelle 1 d'un véhicule militaire blindé (véhicule non représenté) comporte un panier 2 de tourelle destiné à accueillir des équipements de bord ainsi qu'un opérateur (équipements et opérateur non visibles).

La partie supérieure de la tourelle est destinée à émerger d'une caisse 80 du véhicule et comporte une casemate blindée 3. Une couronne dentée 4 assure une liaison pivot permettant à la tourelle 1 de pivoter par rapport à la caisse 80 du véhicule autour d'un axe vertical 7.

Le fond du panier 2 de tourelle 1 comporte un joint tournant électrique 5 destiné à assurer la conduction électrique entre tourelle 1 et caisse 80 afin de permettre la continuité des flux électriques destinés aux commandes ou à la puissance.

Des canalisations 9a et 9b destinées à acheminer de l'air dans la tourelle s'étendent entre le fond du panier 2 de tourelle 1 et la partie supérieure de la tourelle, constituant ainsi un réseau aéraulique tourelle 9.

Le réseau aéraulique tourelle 9 comporte des canalisations 9a destinées à acheminer de l'air frais en provenance de la caisse et des canalisations 9b distinctes destinés à renvoyer vers la caisse l'air qui a été réchauffé dans la tourelle.

Il est évident pour l'Homme du Métier que les moyens de climatisation et ventilation peuvent avoir un fonctionnement réversible qui achemine de l'air chaud en tourelle et extrait de l'air plus frais si les conditions climatiques et thermiques l'exigent. Selon un autre mode de réalisation non préféré, il est envisageable également de n'acheminer l'air que dans un sens et de ne pas mettre de moyens en oeuvre pour l'acheminer dans l'autre sens.

Les canalisations 9a et 9b débouchent dans la partie supérieure de la tourelle 1. En partie inférieure de la tourelle 1, elles sont connectées à un dispositif de distribution d'air 10 qui comprend des joints tournants aérauliques 10 au niveau du fond du panier 2 de tourelle. Les deux joints tournants 10a, 10b du cas de figure représenté sont coaxiaux à l'axe 7 de pivotement tourelle.

Un premier joint tournant 10a est connecté à la canalisation d'air frais 9a du réseau aéraulique 9 de la tourelle et un second joint tournant 10b est connecté à la canalisation d'air chaud 9b.

Ainsi, chaque joint tournant 10a et 10b est dédié respectivement à l'acheminement d'air frais vers la tourelle 1 et d'air chaud vers la caisse 80.

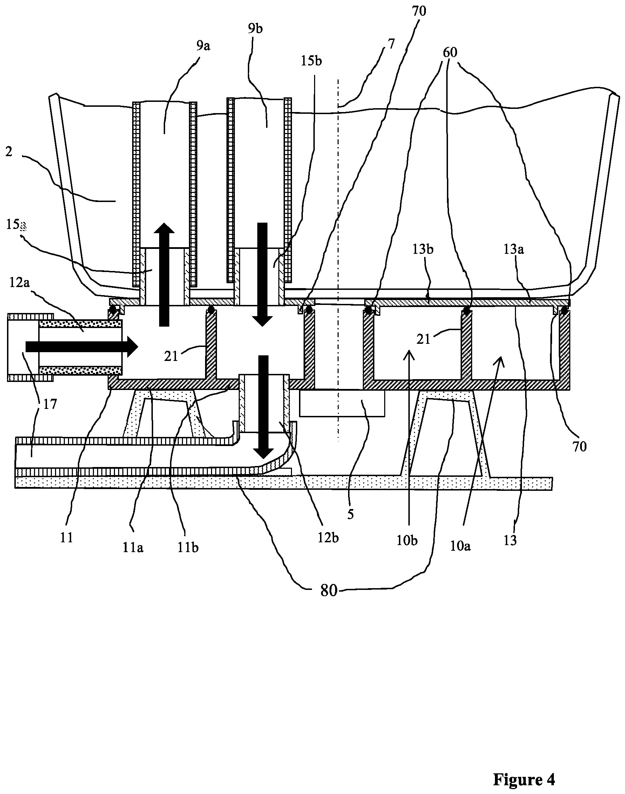

Les joints tournant 10a et 10b sont connectés à un réseau de canalisations 17 de la caisse (réseau de caisse 17 visible figure 4) fournissant de l'air frais en provenance d'une unité de climatisation/ventilation et évacuant l'air chaud vers des échangeurs thermique de cette même unité.

Une partie du joint tournant est solidaire mécaniquement de la caisse et l'autre partie est solidaire mécaniquement de la tourelle comme visible à la figure 4.

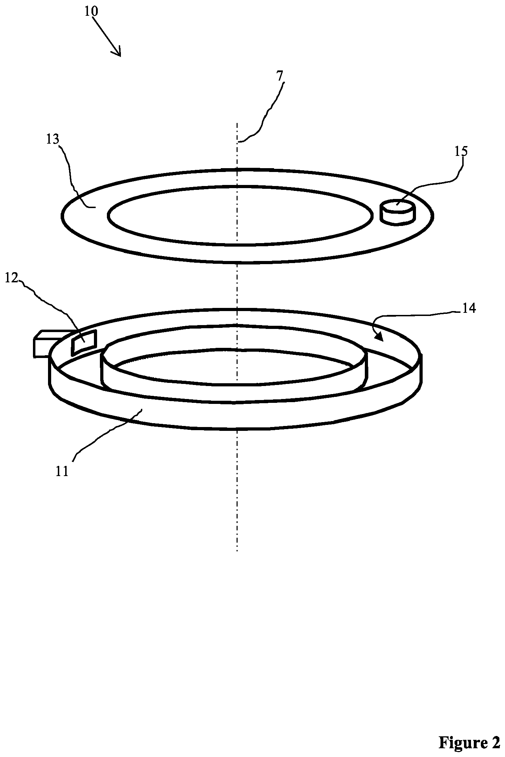

Selon la figure 2, un joint tournant 10 comporte une goulotte annulaire 11 comportant dans sa partie supérieure une ouverture annulaire 14 concentrique à la goulotte 11. La goulotte 11 comporte en un point de sa périphérie un premier orifice 12 destiné à l'écoulement d'air vers le réseau aéraulique 17 de la caisse 80.

Selon la figure 1, le premier orifice 12 est destiné à être connecté à une canalisation de la caisse et la goulotte 11 est destinée à être fixée à la caisse 80 du véhicule.

Un anneau obturateur 13 annulaire est destiné à correspondre avec l'ouverture 14. L'anneau 13 est apte à tourner relativement à la goulotte 11 et concentriquement à celle-ci en formant une liaison étanche à l'air entre l'anneau 13 et la goulotte 11 une fois ces deux éléments assemblés. Cette liaison sera mieux vue à la figure 4.

L'anneau 13 comporte un second orifice 15 d'écoulement d'air. Selon la figure 1, l'anneau 13 est solidaire de la tourelle 1 au niveau du fond de panier 2 et le second orifice 15 est connecté à une canalisation du réseau aéraulique tourelle 9.

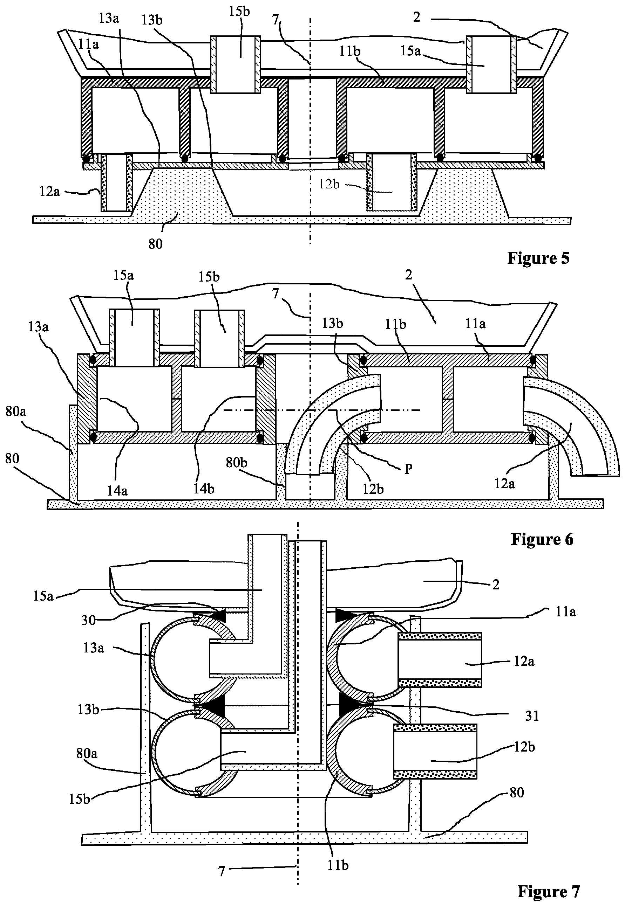

Il est bien entendu possible de réaliser une fixation inverse, c'est à dire de rendre la goulotte 11 solidaire de la tourelle 2 et l'anneau 13 solidaire de la caisse 80 comme visible à la figure 5.

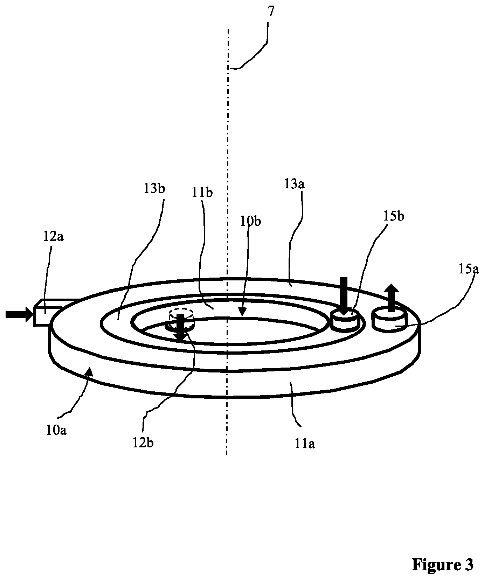

Selon la figure 3, un dispositif de distribution d'air 10 selon un autre mode de réalisation comporte deux joints tournant 10a et 10b qui sont concentriques autour de l'axe 7 de tourelle.

Chaque joint tournant 10a,10b comporte un premier orifice d'écoulement d'air 12a, 12b destiné à être connecté au réseau de ventilation de la caisse et un second orifice 15a, 15b destiné à être connecté au réseau de ventilation 9 de la tourelle 1.

Les goulottes 11a et 11b de chaque joint tournant 10a et 10b sont solidaires de la caisse 80 du véhicule alors que les anneaux 13a et 13b sont solidaires du panier 2 de tourelle 1 (un montage inverse serait bien sûr possible).

De cette manière, le dispositif 10 assure une distribution d'air à double flux.

Dans le premier joint tournant 10a de l'air frais transite de la caisse vers la tourelle 1 et dans le second joint tournant 10b de l'air réchauffé transite de la tourelle vers la caisse 80.

Une telle disposition améliore l'efficacité du refroidissement de la tourelle.

De cette manière la tourelle 1 peut librement tourner et ceci même en enchaînant plusieurs tours consécutifs sans limitation puisque les anneaux 13a et 13b assurent une liaison étanche à l'air avec les goulottes 11a et 11b.

Selon le mode de réalisation de la figure 4, les goulottes 11 sont jointes par un de leurs côtés 21. Par ailleurs les anneaux 13 forment une seule pièce. Une telle disposition présente l'avantage de rendre le dispositif de distribution d'air 10 plus compacte et robuste en solidarisant les éléments qui doivent se mouvoir ensembles tels que les goulottes 11a et 11b d'une part et les anneaux 13a et 13b d'autre part.

Les rebords supérieurs des goulottes 11 comportent des moyens d'étanchéité 60 du type joints toriques 60 qui sont jointifs avec la face inférieure des anneaux 13.

Ces moyens d'étanchéité 60 seront idéalement réalisés dans un matériau anti friction pour favoriser le pivotement des anneaux 13 qui sont guidés en rotation par des épaulements 70 qui correspondent avec l'intérieur des parois interne et externe des goulottes 11. On note que les goulottes 11 sont solidaires d'éléments de la caisse 80. Les anneaux 13 sont quant à eux solidaires du panier 2 de tourelle 1 pour pouvoir en suivre toutes les rotations autour de l'axe 7.

La figure 6 présente un mode de réalisation où deux goulottes 11a et 11b sont juxtaposées au niveau de leur fond. Les ouvertures 14a et 14b des goulottes étant toutes deux orientées suivant un plan P perpendiculaire à l'axe de pivotement tourelle 7. L'ouverture 14a de la première goulotte 11a est disposée au niveau de la périphérie externe de la couronne formée par la goulotte 11a. L'anneau obturateur 13a est alors cylindrique et il est placé en regard de cette ouverture périphérique 14a.

La seconde goulotte 11b est située à l'intérieur de la couronne formée par la première goulotte 11a et elle comporte une ouverture 14b dirigée vers l'intérieur de la couronne. La seconde goulotte 11b est obturée par un second anneau obturateur cylindrique 13b qui est logé à l'intérieur de la couronne 11b ainsi formée par la seconde goulotte 11b.

Le premier et le second anneau obturateur 13a et 13b sont solidaires de la caisse 80 du véhicule au niveau de montants de caisse 80a et 80b, alors que les goulottes 11a et 11b sont solidaires de la tourelle 2. Pour permettre le montage des obturateurs 13a et 13b sur les goulottes 11a et 11b, le corps des goulottes est réalisé en deux parties emboîtables l'une dans l'autre suivant la direction de l'axe 7 de la tourelle.

Comme dans les modes de réalisation précédents, des joints d'étanchéité à faible coefficient de friction permettent les pivotements des goulottes par rapport aux anneaux obturateurs.

Selon le mode de réalisation de la figure 7, les goulottes 11a et 11b équipées de leurs obturateurs 13a, 13b ont une forme globalement torique à section circulaire et sont superposées l'une sur l'autre. Chaque goulotte 11a,11b forme une moitié du tore et l'obturateur correspondant 13a,13b forme l'autre moitié du tore. Les goulottes 11a et 11b peuvent pivoter autour de l'axe de tourelle 7 par rapport aux obturateurs 13a et 13b. A cette fin les goulottes comportent des rainures circulaires dans lesquelles s'engagent les obturateurs.

Dans ce cas de figure la première goulotte 11a est solidaire du panier de tourelle 2 par des moyens de fixation 30. Cette même goulotte 11a est solidaire de la seconde goulotte 11b située en dessous par d'autres moyens de fixation 31.

Les deux anneaux obturateurs 13a et 13b bouchant les ouvertures des goulottes 11a et 11b sont solidaires de la caisse 80 du véhicule par des montants de caisse 80a et 80b. La rotation de la tourelle 2 provoque donc l'entrainement des goulottes 11a et 11b alors que les anneaux obturateurs 13a et 13b sont fixes par rapport à la caisse 80.

On notera que chaque dispositif de distribution d'air est destiné à acheminer de l'air sous faible pression inférieure à 1,5 bars (0,15 Méga Pascals) pour des vitesses de flux d'air de 20 mètres par seconde maximum. La section utile de conduite de l'air est comprise entre 25 et 400 centimètres carrés.

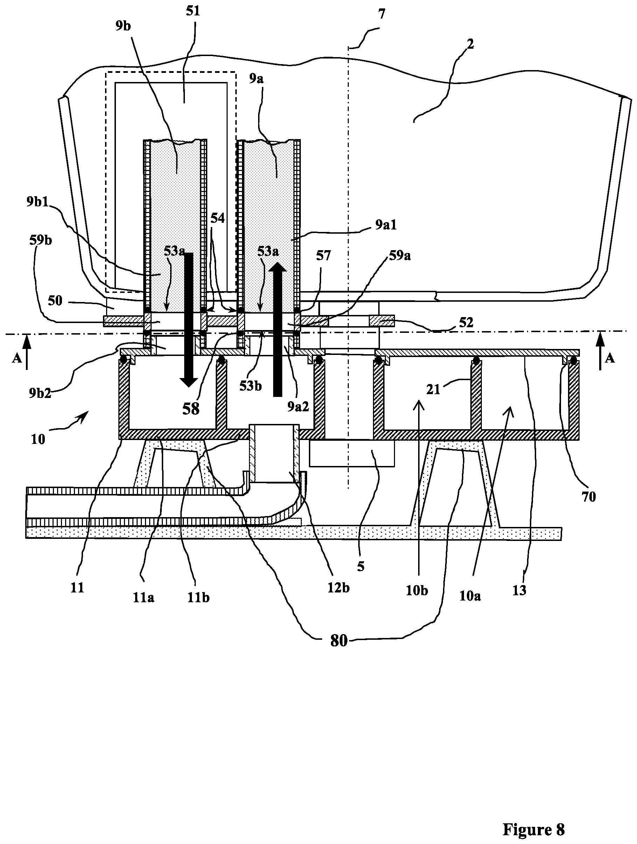

Selon un autre mode de réalisation représenté aux figures 8 à 11, une porte 50 condamne une ouverture 51 qui permet d'accéder à la tourelle. Cette porte 50 pivote autour de l'axe 7 de la tourelle auquel elle est reliée par un plateau 52. Le plateau 52 est situé entre le panier 2 de tourelle et le dispositif de distribution d'air 10 (visible à figure 8).

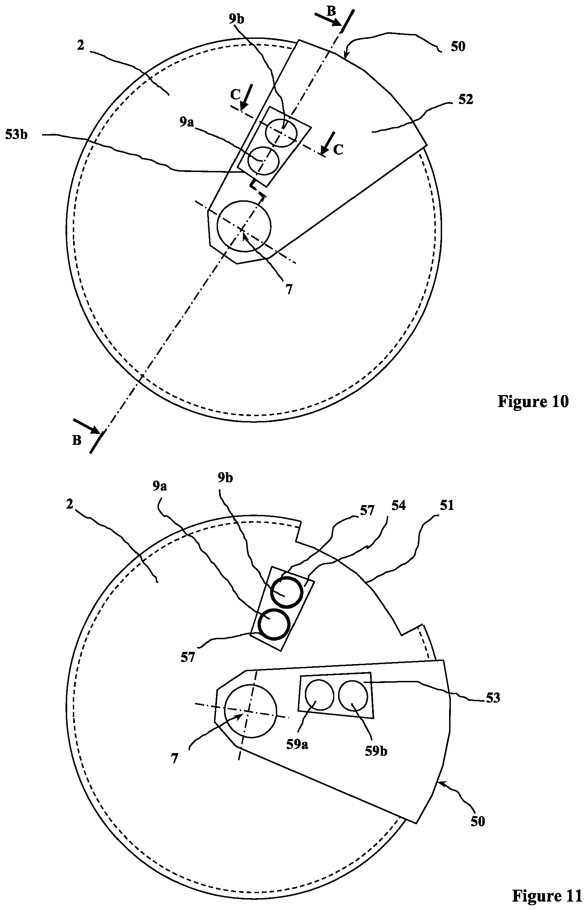

La figure 8 est une vue suivant une coupe à plans parallèles dont la trace BB est repérée à la figure 10. Ce plan coupe donc à la fois le panier et le dispositif de distribution d'air 10 au niveau de l'axe 7 et aussi les deux canalisations 9a et 9b.

Le plateau 52 se situe dans un plan transversal et perpendiculaire aux axes des canalisations 9a et 9b.

Chaque canalisation 9a et 9b se trouve divisée en deux parties coaxiales 9a1 et 9a2 (respectivement 9b1 et 9b2), le plateau 52 circulant entre ces deux parties.

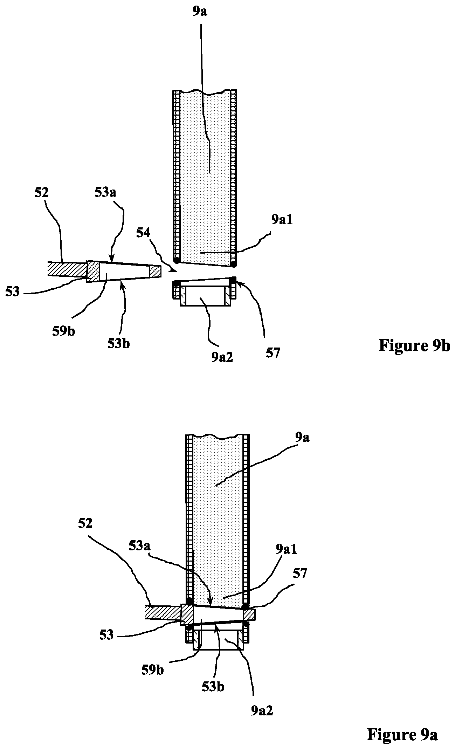

Lorsque la porte 50 est en position fermée, une forme en coin 53 solidaire du plateau 52 traverse chaque canalisation 9a et 9b. La forme en coin 53 est plus particulièrement visible aux figures 9a et 9b qui sont des coupes partielles suivant un plan CC dont la trace est repérée à la figure 10. Ce plan CC est perpendiculaire aux plans parallèles BB.

Cette forme en coin 53 est biseautée de manière à correspondre avec une forme d'entaille 54a, 54b de l'intervalle séparant chaque canalisation 9a,9b en ses deux parties coaxiales 9a1 et 9a2 (respectivement 9b1 et 9b2). Comme on le voit à la figure 11, une seule forme en coin 53 portée par le plateau 52 s'engage dans les entailles 54a et 54b des deux canalisations 9a et 9b. La forme en coin 53 comporte deux perçages 59a et 59b qui sont destinés à faire communiquer les deux parties de chaque canalisation 9a et 9b.

Les bords des deux parties de chaque canalisation 9a, 9b comporteront avantageusement un joint d'étanchéité 57 et 58 qui s'appliquera sur les faces supérieure 53a et inférieure 53b de la forme en coin 53 afin de garantir l'étanchéité du passage de l'air climatisé au travers de deux perçages 59a et 59b qui traversent la forme en coin 53 et qui sont situés chacun en regard de la section de la canalisation 9a et 9b qui est traversée par la forme en coin 53.

Comme on le voit aux figures 10 et 11, le mouvement de fermeture de la porte 50, qui est un mouvement de pivotement du plateau 52 autour de l'axe 7, permet d'engager la forme en coin 53 entre les deux parties 9a1,9a2, 9b1,9b2 de chaque canalisation 9a,9b.

Ce mouvement, grâce à la forme en coin 53, permet d'appliquer une pression des faces supérieures 53a et 53b sur les bords des deux parties 9a1,9a2, 9b1,9b2 de chaque canalisation 9a,9b assurant ainsi une parfaite étanchéité.

Lorsque la porte 50 pivote dans le sens de l'ouverture (position ouverte visible aux figures 9a et 11), la forme en coin 53 est dégagée hors des canalisations 9a et 9b.

## Revendications

1. Dispositif de distribution d'air (10) de climatisation pour une tourelle (1) d'un véhicule montée rotative par rapport à une caisse (80) du véhicule, **caractérisé en ce qu'**il comporte au moins une goulotte (11) annulaire coaxiale à l'axe de rotation de la tourelle et comportant au moins un premier orifice d'écoulement (12a), goulotte (11) comportant une ouverture annulaire (14) qui lui est concentrique, la goulotte (11) recevant un anneau obturateur (13) qui ferme l'ouverture (14) de la goulotte (11), anneau (13) apte à tourner relativement à la goulotte (11), et comportant au moins un second orifice (15) d'écoulement d'air, la goulotte (11) étant destinée à être rendue solidaire de la caisse (80), respectivement de la tourelle, tandis que l'anneau (13) obturateur est destiné à être rendu solidaire de la tourelle (1), respectivement de la caisse.

2. Dispositif de distribution d'air (10) de climatisation selon la revendication 1, **caractérisé en ce qu'**il comprend des moyens (60) assurant l'étanchéité à l'air de la liaison entre goulotte (11) et anneau obturateur (13).

3. Dispositif de distribution d'air (10) de climatisation selon une des revendications 1 ou 2, **caractérisé en ce qu'**il comprend deux goulottes annulaires distinctes (11a,11b) obturées chacune par un anneau obturateur (13), chaque goulotte (11) comportant un premier orifice d'écoulement (12a,12b) et chaque anneau obturateur (13a,13b) comportant un second orifice d'écoulement (15a,15b).

4. Véhicule comportant une tourelle (1) comportant un réseau (9) de ventilation tourelle et une caisse (80) comportant un réseau (17) de ventilation caisse, les réseaux (9,17) comportant chacun des canalisations destinées à l'acheminement d'air chaud et des canalisations distinctes destinées à l'acheminement d'air frais, la tourelle (1) étant montée pivotante sur un axe (7) par rapport à la caisse (80), véhicule **caractérisé en ce qu'**il comporte un dispositif de distribution d'air (10) de climatisation comportant au moins une goulotte (11) annulaire coaxiale à l'axe de rotation (7) de la tourelle (1) et dotée d'au moins un premier orifice d'écoulement (12), goulotte (11) comportant une ouverture annulaire (14) qui lui est concentrique, la goulotte (11) recevant un anneau obturateur (13) qui ferme l'ouverture (14) de la goulotte (11), anneau obturateur (13) apte à tourner relativement à la goulotte (11) et comportant au moins un second orifice d'écoulement d'air (15), la goulotte (11) étant rendue solidaire de la caisse (80), respectivement de la tourelle (1), tandis que l'anneau obturateur (13) est rendu solidaire de la tourelle (1), respectivement de la caisse (80).

5. Véhicule selon la revendication 4, **caractérisé en ce que** la ou les goulottes (11) sont solidaires de la caisse (80) et connectées au réseau (17) de ventilation caisse au niveau du ou des premiers orifices (12), le ou les anneaux obturateurs (13) étant solidaires de la tourelle (1) et connectés au réseau de ventilation tourelle (9) par leurs second orifices (15).

6. Véhicule selon la revendication 5, **caractérisé en ce qu'**il comporte deux goulottes (11a,11b) annulaires distinctes obturées chacune par un anneau obturateur (13a,13b), chaque goulotte (11a,11b) comportant un premier orifice d'écoulement (12a,12b) et chaque anneau obturateur (13a,13b) comportant un second orifice d'écoulement (15a,15b), une première goulotte (11a) constituant un circuit de conduite d'air frais de la caisse (80) vers la tourelle (1) et une deuxième goulotte (11b) constituant un circuit de retour d'air chaud de la tourelle (1) vers la caisse (80).

7. Véhicule selon une des revendications 4 à 6, **caractérisé en ce que** le ou les second orifices (15a,15b) sont prolongés vers la tourelle (2) par une canalisation aéraulique (9a,9b) qui est divisée en deux parties coaxiales (9a1,9a2,9b1,9b2), la tourelle (2) comportant un plateau (52) mobile qui coupe transversalement les canalisations (9a,9b) entre les deux parties des canalisations, plateau mobile entre une position dite ouverte et une position dite fermée, le plateau comportant au moins une forme en coin (53) qui est destinée à coopérer en position fermée avec les deux parties de chaque canalisation (9a,9b) de façon à assurer l'étanchéité de la canalisation (9a,9b), chaque forme en coin (53) comportant au moins un perçage (57) destiné à la circulation d'air, perçage (57) situé en regard de la section traversée de la canalisation (9a,9b).

8. Véhicule selon la revendication 7, **caractérisé en ce que** le plateau (52) est solidaire d'une porte (50) et pivote coaxialement à la tourelle (2) entre une position fermée et une position ouverte de ladite porte.

## Patentansprüche

1. Klimatisierungs-Luftabgabevorrichtung (10) für einen Drehturm (1) eines Fahrzeugs, der rotierbar im Vergleich zu einem Kasten (80) des Fahrzeugs montiert ist, **gekennzeichnet dadurch, dass** sie mindestens eine ringförmige Rinne (11) koaxial zur Rotationsachse des Drehturmes umfasst und mindestens eine erste Austrittsöffnung (12a), wobei die Rinne (11) eine ringförmige Öffnung (14) umfasst, die dazu konzentrisch ist, und wobei die Rinne (11) einen Ringverschluss (13) aufnimmt, der die Öffnung (14) der Rinne (11) schließt, wobei der Ring (13) sich in Bezug auf die Rinne (11) drehen kann, und mindestens eine zweite Öffnung (15) zum Luftaustritt umfasst, wobei die Rinne (11) dazu bestimmt ist, mit dem Kasten (80) fest verbunden zu sein, bzw. mit dem Drehturm, während der Ringverschluss (13) mit dem Drehturm (1) fest verbunden sein soll, bzw. mit dem Kasten.

2. Klimatisierungs-Luftabgabevorrichtung (10) nach Anspruch 1, **gekennzeichnet dadurch, dass** sie Mittel (60) umfasst, die die Luftdichtigkeit der Verbindung zwischen Rinne (11) und Ringverschluss (13) sichern.

3. Klimatisierungs-Luftabgabevorrichtung (10) nach einem der Ansprüche 1 oder 2, **gekennzeichnet dadurch, dass** sie zwei verschiedene ringförmige Rinnen (11a, 11b) umfasst, die jeweils durch einen Ringverschluss (13) verschlossen sind, jede Rinne (11) umfasst eine erste Austrittsöffnung (12a, 12b) und jeder Ringverschluss (13a, 13b) umfasst eine zweite Austrittsöffnung (15a, 15b).

4. Fahrzeug mit einem Drehturm (1), der ein Netz (9) zur Belüftung des Drehturms umfasst, und mit einem Kasten (80), der ein Netz (17) zur Belüftung des Kastens umfasst, wobei die Netze (9, 17) jeweils Kanäle zur Zuführung warmer Luft und davon verschiedene Kanäle zur Zuführung von Frischluft umfassen, wobei der Drehturm (1) auf einer Achse (7) drehbar im Vergleich zu dem Kasten (80) montiert ist und das Fahrzeug **dadurch gekennzeichnet ist, dass** es eine Klimatisierungs-Luftabgabevorrichtung (10) umfasst, die mindestens eine ringförmige Rinne (11) koaxial zur Rotationsachse (7) des Drehturmes (1) umfasst und mindestens eine erste Austrittsöffnung (12), wobei die Rinne (11) eine ringförmige Öffnung (14) umfasst, die dazu konzentrisch ist, und wobei die Rinne (11) einen Ringverschluss (13) aufnimmt, der die Öffnung (14) der Rinne (11) schließt, wobei der Ring (13) sich in Bezug auf die Rinne (11) drehen kann, und mindestens eine zweite Öffnung (15) zum Luftaustritt umfasst, wobei die Rinne (11) dazu bestimmt ist, mit dem Kasten (80) fest verbunden zu sein, bzw. mit dem Drehturm, während der Ringverschluss (13) mit dem Drehturm (1) fest verbunden sein soll, bzw. mit dem Kasten (80).

5. Fahrzeug nach Anspruch 4, **gekennzeichnet dadurch, dass** die Rinne(n) (11) mit dem Kasten (80) und mit dem Netz (17) zur Belüftung des Kastens verbunden sind, auf der Ebene der ersten Öffnung(en) (12), wobei der oder die Ringverschlüsse (13) mit dem Drehturm (1) und mit dem Netz zur Belüftung des Drehturms (9) durch ihre zweiten Öffnungen (15) verbunden sind.

6. Fahrzeug nach Anspruch 5, **gekennzeichnet dadurch, dass** es zwei verschiedene ringförmige Rinnen (11a, 11b) umfasst, die jeweils durch einen Ringverschluss (13a, 13b) verschlossen sind, jede Rinne (11a,11b) umfasst eine erste Austrittsöffnung (12a, 12b) und jeder Ringverschluss (13a, 13b) umfasst eine zweite Austrittsöffnung (15a, 15b), wobei eine erste Rinne (11a) einen Frischluftleitungs-Kreislauf von dem Kasten (80) zum Drehturm (1) bildet und eine zweite Rinne (11b) einen Warmluftrücklauf-Kreislauf vom Drehturm (1) zum Kasten (80) bildet.

7. Fahrzeug nach einem der Ansprüche 4 bis 6, **gekennzeichnet dadurch, dass** die zweite(n) Öffnung(en) (15a, 15b) zum Drehturm (2) hin durch einen Windkanal (9a, 9b) verlängert sind, der in zwei koaxiale Teile (9a1, 9a2,9b1, 9b2) geteilt ist, der Drehturm (2) umfasst eine bewegliche Platte (52), die die Kanäle (9a, 9b) zwischen den beiden Teilen der Kanäle quer schneidet, die bewegliche Platte befindet sich zwischen einer sog. geöffneten und einer sog. verschlossenen Position, die Platte umfasst mindestens eine Eckform (53), die dazu bestimmt ist, in geschlossener Position mit den beiden Teilen jedes Kanals (9a, 9b) zusammenzuwirken, um die Dichtigkeit der Kanalisierung (9a, 9b) zu sichern, jede Eckform (53) umfasst mindestens eine Bohrung (57) für den Luftkreislauf, die gegenüber dem von den Kanälen (9a, 9b) durchquerten Abschnitt liegt.

8. Fahrzeug nach Anspruch 7, **gekennzeichnet dadurch, dass** die Platte (52) mit einer Tür (50) verbunden ist und koaxial zum Drehturm (2) zwischen einer geschlossenen und einer geöffneten Position der Tür rotiert.

## Claims

1. An air-conditioning air distribution device (10) for a vehicle turret (1) rotatably mounted with respect to a body (80) of the vehicle, **characterized in that** it comprises at least one annular chute (11) coaxial with the axis of rotation of the turret and comprising at least one first flow orifice (12a), the chute (11) having an annular opening (14) which is concentric thereto, the chute (11) receiving a closing ring (13) which closes the opening (14) of the chute (11), the ring (13) being rotatable with respect to the chute (11), and comprising at least one second air flow orifice (15), the chute (11) being intended to be made integral with the body (80), respectively with the turret, while the closing ring (13) is intended to be made integral with the turret (1), respectively with the body.

2. The air-conditioning air distribution device (10) according to claim 1, **characterized in that** it comprises means (60) ensuring the air-tightness of the connection between the chute (11) and the closing ring (13) .

3. The air-conditioning air distribution device (10) according to one of claims 1 or 2, **characterized in that** it comprises two separate annular chutes (11a, 11b), each one being closed by a closing ring (13), each chute (11) having a first flow orifice (12a, 12b) and each closing ring (13a, 13b) having a second flow orifice (15a, 15b) .

4. A vehicle comprising a turret (1) having a turret ventilating network (9) and a body (80) having a body ventilating network (17), the networks (9,17) each comprising ducts for supplying hot air and separate ducts for supplying cold air, the turret (1) being pivotably mounted on an axis (7) with respect to the body (80), the vehicle being **characterized in that** it comprises an air-conditioning air distribution device (10) comprising at least one annular chute (11) coaxial with the axis of rotation (7) of the turret (1) and having at least one first flow orifice (12), the chute (11) having an annular opening (14) which is concentric thereto, the chute (11) receiving a closing ring (13) which closes the opening (14) of the chute (11), the closing ring (13) being rotatable with respect to the chute (11) and comprising at least one second air flow orifice (15), the chute (11) being made integral with the body (80), respectively with the turret (1), while the closing ring (13) is made integral with the turret (1), respectively with the body (80).

5. The vehicle according to claim 4, **characterized in that** the one or more chutes (11) are integral with the body (80) and connected to the body ventilating network (17) at the one ore more first orifices (12), the one or more closing rings (13) being integral with the turret (1) and connected to the turret ventilating network (9) by their second orifices (15).

6. The vehicle according to claim 5, **characterized in that** it comprises two separate annular chutes (11a, 11b), each one being closed by a closing ring (13a, 13b), each chute (11a, 11b) having a first flow orifice (12a, 12b) and each closing ring (13a, 13b) having a second flow orifice (15a, 15b), a first chute (11a) constituting a circuit for supplying cold air from the body (80) to the turret (1), and a second chute (11b) constituting a circuit for returning hot air from the turret (1) to the body (80).

7. The vehicle according to one of claims 4 to 6, wherein the one or more second orifices (15a, 15b) are extended toward the turret (2) by an aeraulic duct (9a, 9b) which is divided into two coaxial parts (9a1,9a2,9b1,9b2), the turret (2) having a movable plate (52) which transversely crosses the ducts (9a, 9b) between the two parts of the ducts, the plate being movable between a so-called open position and a so-called closed position, the plate comprising at least one wedge shape (53) which is intended to cooperate, when in closed position, with the two parts of each duct (9a, 9b) so as to ensure the sealing of the duct (9a, 9b), each wedge shape (53) having at least one bore (57) for the circulation of air, the bore (57) being arranged facing the section of the duct (9a,9b) that is crossed.

8. The vehicle according to claim 7, **characterized in that** the plate (52) is integral with a door (50) and pivots coaxially to the turret (2) between a closed position and an open position of said door.
